# EUROPEAN PATENT SPECIFICATION

(11) **EP 2 590 363 B1**
(45) Date of publication and mention of the grant of the patent: **08.05.2019**
(21) Application number: 11809163.6
(22) Date of filing: 24.02.2011
(51) Int. Cl.: H04L 12/24

(54) **METHOD AND SYSTEM FOR COLLECTING PERFORMANCE STATISTICS DATA**
VERFAHREN UND SYSTEM ZUM SAMMELN VON LEISTUNGSSTATISTIKDATEN
PROCÉDÉ ET SYSTÈME PERMETTANT DE COLLECTER DES DONNÉES STATISTIQUES DE PERFORMANCES

(30) Priority: 22.07.2010 CN 201010234158
(43) Date of publication of application: 08.05.2013
(73) Proprietor: ZTE Corporation, Shenzhen, Guangdong 518057 (CN)
(72) Inventor: SHAO, Minfeng, Shenzhen Guangdong 518057 (CN)
(74) Representative: V.O.
(86) International application number: PCT/CN2011/071267
(87) International publication number: WO 2012/009974

(56) References cited:
- CN-A- 1 722 676
- CN-A- 101 039 211
- CN-A- 101 039 211
- CN-A- 101 072 130
- CN-A- 101 883 014
- US-A- 5 889 470

## Description

### TECHNICAL FIELD

The disclosure relates to the field of communications, in particular to a method and system for collecting performance statistical data.

### BACKGROUND

In the network management field of telecommunications, performance statistics refers to collecting related statistical data, evaluating the effectiveness of a network and a network element, reporting the status of a telecommunication device, and supporting network planning and network analysis through the performance monitoring to a network, network element or device, so as to improve the network performance and efficiency, and enhance the operation capability and service capability of an operator.

A conventional performance statistical method includes: object configuring, task creating and synchronizing, data collecting, data reporting and inputting, data presenting and other functions. The main process of the conventional performance statistical method is: creating a configuration object, such as a Message Transfer Part level 3 (MTP3) signaling link, adjacent bureau direction, etc., synchronizing the object to a foreground in the mode of a task, reporting performance data according to a designated configuration object, and counting and processing the data according to a requirement in a network manager.

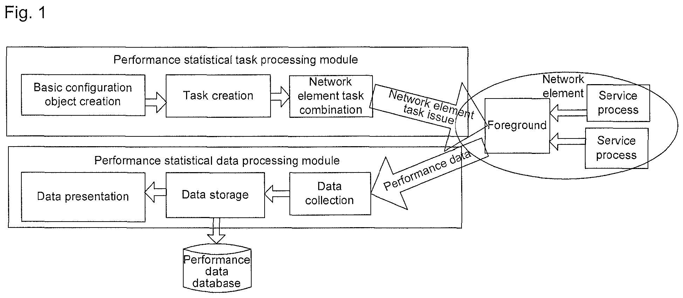

An existing performance statistical implementation system is as shown in Fig. 1, wherein a data is transmitted to a data storage module and stored in a permanent medium after collected through a data collection module, and finally presented to a user in form of a report.

In the existing performance statistical method, a data lacks of flexibility when presented in an Operations & Maintenance Center (OMC); the re-processing of the data by a user is low in efficiency, and poor in operability and usability; and a big amount of collected data is not mined deeply and the amount of reported data is large, resulting in a higher requirement on the burden of a foreground single board and network transmission capability.

It is noted that patent publication US 5,889,470 discloses a digital subscriber line (DSL) access device management information base (MIB) allows the remote management of a DSL access device by using a constructed enterprise DSL MIB to define a plurality of objects that describe the operation of a DSL access device. These objects are used to monitor the performance of, and if desired, send commands to the DSL access device. The enterprise DSL MIB in US '470 contains a first child group which contains selected ones of the plurality of objects which describe information specific to digital subscriber line access devices, a second child group containing selected ones of the plurality of objects which describe statistics specific to a digital subscriber line access device link, and a third child group containing selected ones of the plurality of objects which define IP (Internet Protocol) and MAC (Media Access Control) layer filter addresses corresponding to a specific digital subscriber line access device interface on a specific digital subscriber line access device module within a digital subscriber line access device. The enterprise DSL MIB of US '470 also includes a trap child group which describes the DSL access device uptime and downtime.

It is further noted that patent publication CN 101039211A discloses a customization and inquiry method of performance data and system thereof. The system includes a data acquisition module, a background database, a template customization module and a customization inquiry module. The method comprises the following steps: defining an original performance object, the name and identifier thereof in the background database system; customizing template, namely when inquiring an object set, selecting one or more related performances of the object set as a template attribute and storing the template; collecting the performance data at the foreground data collection system, sending the same to the background for storing; the user selecting the template and setting an inquiry parameter, sending the inquiry command to the background server, which analyses the attribute of the template and the inquiry parameter, forming an inquiry language to perform the database inquiry, and returning the result back to the client end for display.

### SUMMARY

The disclosure provides a performance statistical data collection method, so as to collect performance statistical data conveniently and quickly.

To fulfil the objective above, the technical scheme of the disclosure is implemented as follows.

A network performance statistical data collection method according to claim 1, includes the following steps:
A, a network manager configures a basic object according to a requirement, wherein the basic object comprises a bureau direction, an operator and/or an IP address;
B, the network manager sets object sets according to the basic object and sets specific objects in each object set, and synchronizes the object sets and the specific objects therein to a foreground, wherein
   the specific object is the specific form of the basic object; the foreground is a single board where a service occurs at the network element side of a core network element;
C, the network manager creates a measurement task according to the object sets and synchronizes the measurement task to the foreground; and
D, the network manager counts received network performance statistical data according to a requirement;
   wherein between Steps C and D, the method further comprises:
   filtering, by the foreground, the network performance statistical data meeting the measurement task and matching the specific objects in the object sets from received service data, and transmitting the network performance statistical data to the network manager,
   wherein the object set comprises a group and combining relationship, wherein each group includes at least one specific object, and each combining relationship includes at least a group of combination comprising two specific objects.

In Step C, the method for creating the measurement task according to the objects in the object sets may be:
creating a measurement task for measuring each property according to the measurable properties of the object sets.

After Step D, the method may further include: the network manager stores the performance statistical data into a statistical database.

A network performance statistical data collection system according to claim 4, includes a network manager and a foreground, the network manager including a basic object configuration module, an object set setting module, a task creation module and a counting module, wherein
the basic object configuration module is configured to configure a basic object according to a requirement, wherein the basic object comprises a bureau direction, an operator and/or an IP address;
the object set setting module is configured to set object sets according to the basic object and set specific objects in each object set, and synchronize the object sets and the specific objects therein to the foreground, and the specific object is the specific form of the basic object; the foreground being a single board where a service occurs at the network element side of a core network element;
the task creation module is configured to create a measurement task according to the object sets and synchronize the measurement task to the foreground; and
the counting module is configured to count received network performance statistical data according to a requirement;
the foreground comprising a filtering module configured to filter the network performance statistical data meeting the measurement task and matching the specific objects in the object sets from received service data, and transmit the network performance statistical data to the network manager,
wherein the object set setting module comprises a group setting sub-module and a combining relationship setting sub-module, wherein
each group set by the group setting sub-module includes at least a specific object; and
each combining relationship set by the combining relationship setting sub-module includes at least a group of combination comprising two specific objects.

When creating the measurement task according to the objects in the object set, the task creation module may be configured to:
create a measurement task for measuring each property according to measurable properties of the object set.

The system may further include a statistical database, which is configured to store the performance statistical data from the network manager.

The disclosure has the following advantages:
The disclosure discloses a performance statistical data collection method, configures a basic object, sets object sets according to the requirement of a user in a network manager, and sets specific objects in each object set, creates a measurement task, and counts received performance statistical data according to the requirement of the user. In the method of the disclosure, the user can configure the basic object according to the requirement and combine the specific objects in the object set, which is convenient, fast and practical; and, the performance statistical data is further counted and managed at the network manager automatically, which is efficient and fast, thus providing the user a more attentive and humanized service.

### BRIEF DESCRIPTION OF THE DRAWINGS

Fig. 1 schematically shows a diagram of an existing performance statistical data collection method;
Fig. 2 schematically shows a flowchart of a performance statistical data collection method of the disclosure; and
Fig. 3 schematically shows a diagram showing the structure of a performance statistical data collection system of the disclosure.

### DETAILED DESCRIPTION

The disclosure discloses a performance statistical data collection method, including the following steps:
A, a network manager configures a basic object according to the requirement of a user;
B, the network manager sets object sets according to the basic object and sets specific objects in each object set, and synchronizes the object sets and the specific objects therein to a foreground; the specific objects is the specific form of the basic object;
C, the network manager creates a measurement task according to the object sets and synchronizes the measurement task to the foreground; and
D, the network manager counts received performance statistical data according to the requirement of the user.

In the disclosure, the foreground refers to a single board where a service occurs at the network element side of a core network element.

### Embodiment one:

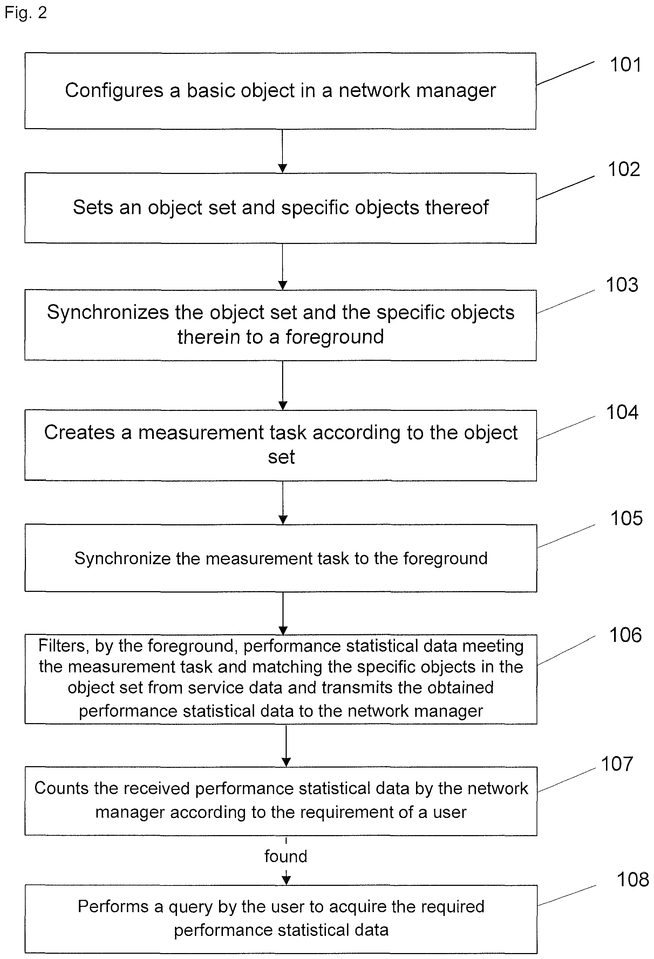

As shown in Fig. 2, a performance statistical data collection method in an embodiment of the disclosure includes the following steps:
Step 101: A basic object is configured in a network manager.

The basic object can be either a bureau direction or an operator, an IP address, etc., which can be configured according to the requirement of a user.

Step 102: An object set as well as specific objects therein are set.

The specific objects are the specific form of the basic object.

There may be a plurality of object sets; in this embodiment, the object set includes a group and combining relationship, wherein each group includes at least a specific object, and each combining relationship includes at least a group of combination comprising two specific objects.

For example, if the basic object configured in the network manager is an IP address, the set object set is an IP address group and the specific objects in the IP address group can be 192.168.10.1 or other specific IP addresses.

If the basic object configured in the network manager is an operator, the set combining relationship is operator-operator and the object in the combining relationship is specifically Unicom-Mobile.

The group and the combining relationship can also be configured at the same time.

A user combines objects which are capable of reflecting performance that the user concerns according to a requirement, and configures various groups or combining relationships in the network manager according to a requirement, which is convenient and practical.

Step 103: The object set and the specific objects therein are synchronized to a foreground.

Step 104: A measurement task is created according to the object set.

A measurement task for measuring each property is created according to measurable properties of the object set.

For example, if the specific object is an IP address, the measurable properties thereof include traffic, delay, packet loss and the like of the IP address, and the created corresponding measurement tasks are: a traffic task for measuring a certain IP address, a delay task for measuring a certain IP address, a packet loss task for measuring a certain IP address, etc.

For example, if the object set is bureau direction 1-bureau direction 2, the measurable properties thereof include telephone traffic, short message volume and the like from bureau direction 1 to bureau direction 2, and the created corresponding measurement tasks are: a task for measuring the telephone traffic from bureau direction 1 to bureau direction 2, a task for measuring the short message volume from bureau direction 1 to bureau direction 2, etc.

The measurable properties of the object set reflect the effectiveness, device status, network performance, efficiency and the like of a network and a network element in different aspects, which can be used for evaluating the performance of the network.

Step 105: The measurement task is synchronized to the foreground.

In this embodiment, the object set, the specific objects therein and the measurement task are synchronized to the foreground in an agent adaptation way, and the foreground can achieve the synchronization only by modifying the agent adaptation way without modifying the corresponding service process, which is simple and efficient.

Step 106: The foreground filters the performance statistical data meeting the measurement task and matching the specific objects in the object set from received service data, and transmits the data to the network manager.

In this embodiment, the filtration includes two steps, the first step is filtering the data meeting the measurement task from the service data, and the second step is filtering the data matching the specific objects in the object set from the data above.

In the embodiment of the disclosure, the data is filtered in the foreground, so that the data needs to be transmitted and transferred between memories as well as the burden of the network are reduced and a high efficiency is achieved; and at the same time, the burden of the network manager is also reduced and the usability of the network manager is improved.

Step 107: The network manager counts the received performance statistical data according to the requirement of the user, and stores the counted data to a statistical database.

After receiving the performance statistical data, the network manager counts the data according to the requirement of the user, for example, counts at a time interval within 15min, 1h, 12h or 24h, or the packet loss volume, delay or data volume with 192.168.10.1 as an IP address.

The counting rule above, such as time interval, is default to the network manager, or can be set in advance by the user according to a requirement.

The performance statistical data is further counted in the network manager according to the requirement of the user, so as to provide the user a more attentive and humanized service.

Step 108: The user performs a query in the statistical database to acquire required performance statistical data.

### Example one:

A performance statistical data collection method in an embodiment of the disclosure includes the following steps:
Step 201: A basic object, IP address, is configured in a network manager.
Step 202: An IP address group is set and the specific IP addresses therein is set to be 182.168.10.1, and 182.168.10.2.
Step 203: The IP address group and the information of the specific IP addresses therein are synchronized to a foreground.
Step 204: A measurement task for measuring experimental packet loss is created according to the IP address group.
Step 205: The measurement task mentioned above is synchronized to the foreground.
Step 206: The foreground filters the performance statistical data meeting the measurement task of the IP address group and to be transmitted to the IP addresses 182.168.10.1 and 182.168.10.2 from received service data.
   In the embodiment, generally, the data meeting the measurement task of the IP address group is filtered at first, and then, the data to be transmitted to the IP addresses 182.168.10.1 and 182.168.10.2 is filtered from the data filtered above.
Step 207: The network manager respectively counts the delays and packet losses of the received performance statistical data of the two destination IP addresses and stores the counted data to a statistical database.
Step 208: A user performs a query according to a specific IP address and time interval to acquire required statistical data. For example, the user queries the delay and packet loss within one hour of the IP address 182.168.10.1, and then presents according to a requirement.

### Embodiment two:

A performance statistical data collection method in an embodiment of the disclosure includes the following steps:
Step 301: Basic objects, operator and bureau direction, are configured in a network manager.
Step 302: An operator combining relationship is configured: operator 1-operator 2, which is specifically Unicom-Mobile; and a bureau direction group is: to Nanjing.
Step 303: The operator combining relationship and the specific operator information and the bureau direction group therein as well as the specific bureau direction information therein are synchronized to a foreground.
Step 304: A measurement task is created according to the operator combining relationship; in this embodiment, the created measurement task includes: a telephone traffic task with a bureau direction as a measurement destination and is transmitted from operator 1 to operator 2, and a short message volume task with a bureau direction as a measurement destination and is transmitted from operator 1 to operator 2.
Step 305: The measurement task is synchronized to the foreground.
Step 306: The foreground filters the data meeting the measurement task created according to the operator combining relationship from received service data, then filters, from the data obtained above, the data with Nanjing as a destination and transmitted from Unicom to Mobile, and transmits the final performance statistical data to the network manager.
   Generally, the foreground filters in batches, for example, firstly filters the data of the telephone traffic task with a bureau direction as a measurement destination and is transmitted from operator 1 to operator 2, and the data of the short message volume task with a bureau direction as a measurement destination and is transmitted from operator 1 to operator 2, then filters the data with Nanjing as a destination from the data obtained above, and further filters the data from Unicom to Mobile from the data obtained above.
Step 307: The network manager respectively counts, in the received data, the telephone traffic with Nanjing as a destination and is transmitted from Unicom to Mobile, and the short message volume with Nanjing as a destination and is transmitted from Unicom to Mobile, and stores the counted data to a statistical database.
Step 308: The user performs a query in the database according to a requirement.

### Embodiment three:

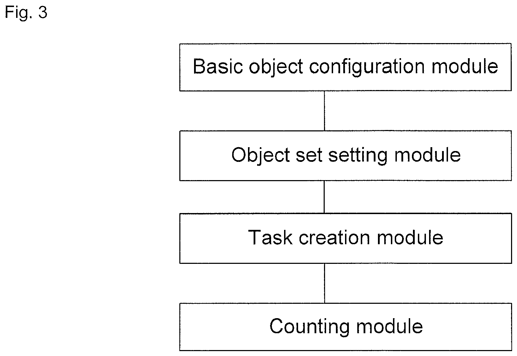

As shown in Fig. 3, a performance statistical data collection system in an embodiment of the disclosure includes a network manager, which includes a basic object configuration module, an object set setting module, a task creation module and a counting module, wherein the basic object configuration module is configured to configure a basic object;
the object set setting module is configured to set object sets according to the basic object and set specific objects in each object set, and synchronize the object sets and the specific objects therein to a foreground, the specific object is the specific form of the basic object;
the task creation module is configured to create a measurement task according to the object sets and synchronize the measurement task to the foreground; and
the counting module is configured to count the received measurement data according to the requirement of a user.

In an embodiment of the performance statistical data collection system, the system includes a foreground, which includes a filtering module configured to filter data meeting the measurement task and matching the specific objects in the object set from received service data, and transmit the data to the network manager.

In an embodiment of the performance statistical data collection system, the object set setting module includes a group setting sub-module and a combining relationship setting sub-module, wherein each group set by the group setting sub-module includes at least a specific object; and each combining relationship set by the combining relationship setting sub-module includes at least a group of combination comprising two specific objects.

In an embodiment of the performance statistical data collection system, the task creation module is further configured to create a measurement task for measuring each property according to measurable properties of the object sets.

In an embodiment of the performance statistical data collection system, the system further includes a statistical database, which is configured to store the performance statistical data.

The disclosure discloses a performance statistical data collection method, configures a basic object, sets object sets according to the requirement of a user in a network manager, and sets specific objects in each object set, creates a measurement task, and counts received performance statistical data according to the requirement of the user. In the method of the disclosure, the user can configure the basic object according to the requirement and combine the specific objects in the object set, which is convenient, fast and practical; and, the performance statistical data is further counted and managed at the network manager automatically, which is efficient and fast, thus providing the user a more attentive and humanized service. In addition, the data is filtered in the foreground in the disclosure, so that the data needs to be transmitted and transferred between memories as well as the burden of the network are reduced, and a high efficiency is achieved; and at the same time, the burden of the network manager is also reduced and the usability of the network manager is improved.

It should be noted that, besides the user requirement, the current requirements of gateway statistical capacity and communication quality and other various requirement factors can be considered, therefore, the network manager can configure the basic object, count the received performance statistical data and perform other operation also based on other specific requirements besides the user requirement.

The above are the further descriptions of the disclosure with reference to the specific embodiments, and it should not be considered that the specific embodiments of the disclosure are only limited to these descriptions. Various simple derivations or replacements can be made by those skilled in the art.

## Claims

1. A network performance statistical data collection method, **characterized by** comprising the following steps:
A, configuring a basic object by a network manager according to a requirement (S101), wherein the basic object comprises a bureau direction, an operator and/or an IP address;
B, setting, by the network manager, object sets according to the basic object and setting specific objects in each object set (S102), and synchronizing the object sets and the specific objects therein to a foreground (S103), wherein,
the specific object is the specific form of the basic object; the foreground is a single board where a service occurs at the network element side of a core network element;
C, creating, by the network manager, a measurement task according to the object sets (S104) and synchronizing the measurement task to the foreground (S105); and
D, counting ,by the network manager, received network performance statistical data according to a requirement (S107);
wherein between Steps C and D, the method further comprises:
filtering, by the foreground, the network performance statistical data meeting the measurement task and matching the specific objects in the object sets from received service data, and transmitting the network performance statistical data to the network manager (S106);
wherein the object set comprises a group and combining relationship, wherein each group comprises at least one specific object, and each combining relationship comprises at least a group of combination comprising two specific objects.

2. The method according to claim 1, wherein in Step C, the method for creating the measurement task according to the objects in the object sets is:
creating a measurement task for measuring each property according to the measurable properties of the object sets.

3. The method according to any one of claims 1 to 2, wherein after Step D, the method further comprises: storing the performance statistical data into a statistical database by the network manager.

4. A network performance statistical data collection system, **characterized by** comprising a network manager and a foreground, the network manager comprising a basic object configuration module, an object set setting module, a task creation module and a counting module, wherein
the basic object configuration module is configured to configure a basic object according to a requirement, wherein the basic object comprises a bureau direction, an operator and/or an IP address;
the object set setting module is configured to set object sets according to the basic object and set specific objects in each object set, and synchronize the object sets and the specific objects therein to the foreground, and the specific object is the specific form of the basic object; the foreground being a single board where a service occurs at the network element side of a core network element;
the task creation module is configured to create a measurement task according to the object sets and synchronize the measurement task to the foreground; and
the counting module is configured to count received network performance statistical data according to a requirement;
the foreground comprising a filtering module configured to filter the network performance statistical data meeting the measurement task and matching the specific objects in the object sets from received service data, and transmit the network performance statistical data to the network manager;
wherein the object set setting module comprises a group setting sub-module and a combining relationship setting sub-module, wherein
each group set by the group setting sub-module comprises at least one specific object; and
each combining relationship set by the combining relationship setting sub-module comprises at least a group of combination comprising two specific objects.

5. The system according to claim 4, wherein when creating the measurement task according to the objects in the object sets, the task creation module is configured to
create a measurement task for measuring each property according to measurable properties of the object sets.

6. The system according to any one of claims 4 to 5, further comprising a statistical database, which is configured to store the performance statistical data from the network manager.

## Patentansprüche

1. Verfahren zur Erfassung statistischer Daten zur Netzwerkleistung, **dadurch gekennzeichnet, dass** es die folgenden Schritte umfasst:
A, Konfigurieren eines Basisobjekts durch einen Netzwerkverwalter gemäß einer Anforderung (S101), wobei das Basisobjekt eine Bürorichtung, einen Operator und/oder eine IP-Adresse umfasst;
B, Einstellen durch den Netzwerkverwalter der Objektsätze gemäß dem Basisobjekt und Einstellen spezifischer Objekte in jedem Objektsatz (S102) und Synchronisieren der Objektsätze und der darin enthaltenen spezifischen Objekte mit einem Vordergrund (S103), wobei
das spezifische Objekt die spezifische Form des Basisobjekts ist; der Vordergrund eine einzelne Karte ist, auf der ein Dienst auf der Netzwerkelementseite eines Kernnetzelements auftritt;
C, Erstellen durch den Netzwerkverwalter einer Messaufgabe gemäß den Objektsätzen (S104) und Synchronisieren der Messaufgabe mit dem Vordergrund (S105); und
D, Zählen durch den Netzwerkverwalter, empfangener statistischer Daten zur Netzwerkleistung gemäß einer Anforderung (S107);
wobei zwischen den Schritten C und D das Verfahren weiter Folgendes umfasst:
Filtern durch den Vordergrund statistischer Daten zur Netzwerkleistung, die die Messaufgabe erfüllen und Anpassen der spezifischen Objekte in den Objektsätzen aus empfangenen Dienstdaten und Übertragen der statistischen Daten zur Netzwerkleistung an den Netzwerkverwalter (S106);
wobei der Objektsatz eine Gruppe und ein Kombinationsverhältnis umfasst, wobei jede Gruppe mindestens ein spezifisches Objekt umfasst und jedes Kombinationsverhältnis mindestens eine Kombinationsgruppe umfasst, die zwei spezifische Objekte umfasst.

2. Verfahren nach Anspruch 1, wobei in Schritt C das Verfahren zum Erstellen der Messaufgabe gemäß den Objekten in den Objektsätzen wie folgt ist:
Erstellen einer Messaufgabe zum Messen jeder Eigenschaft gemäß den messbaren Eigenschaften der Objektsätze.

3. Verfahren nach einem der Ansprüche 1 bis 2, wobei das Verfahren nach Schritt D weiter Folgendes umfasst: Speichern der statistischen Leistungsdaten in einer statistischen Datenbank durch den Netzwerkverwalter.

4. System zur Erfassung statistischer Daten zur Netzwerkleistung, **dadurch gekennzeichnet, dass** es einen Netzwerkverwalter und einen Vordergrund umfasst, wobei der Netzwerkverwalter ein Basisobjektkonfigurationsmodul, ein Objektsatz-Einstellungsmodul, ein Aufgabenerstellungsmodul und ein Zählmodul umfasst, wobei
das Basisobjektkonfigurationsmodul konfiguriert ist, um ein Basisobjekt gemäß einer Anforderung zu konfigurieren, wobei das Basisobjekt eine Bürorichtung, einen Operator und/oder eine IP-Adresse umfasst;
das Objektsatz-Einstellungsmodul konfiguriert ist, um Objektsätze gemäß dem Basisobjekt einzustellen und spezifische Objekte in jedem Objektsatz einzustellen und die Objektsätze und die darin enthaltenen spezifischen Objekte mit dem Vordergrund zu synchronisieren, und das spezifische Objekt die spezifische Form des Basisobjekts ist; wobei der Vordergrund eine einzelne Karte ist, auf der ein Dienst auf der Netzwerkelementseite eines Kernnetzelements auftritt;
das Aufgabenerstellungsmodul konfiguriert ist, um eine Messaufgabe gemäß den Objektsätzen zu erstellen und die Messaufgabe mit dem Vordergrund zu synchronisieren; und
das Zählmodul so konfiguriert ist, dass es die empfangenen statistischen Daten zur Netzwerkleistung entsprechend einer Anforderung zählt;
wobei der Vordergrund ein Filtermodul umfasst, das so konfiguriert ist, dass es die statistischen Daten zur Netzwerkleistung filtert, die die Messaufgabe erfüllen und zu den spezifischen Objekten in den Objektsätzen in den empfangenen Dienstdaten passen, und die statistischen Daten zur Netzwerkleistung an den Netzwerkverwalter überträgt;
wobei das Objektsatz-Einstellungsmodul ein Gruppeneinstellungs-Submodul und ein Kombinationsverhältniseinstellungs-Submodul umfasst, wobei
jede Gruppe, die durch das Gruppeneinstellungs-Submodul festgelegt wird, mindestens ein spezifisches Objekt umfasst; und
jedes durch das Kombinationsbeziehungseinstellungs-Submodul eingestellte Kombinationsverhältnis mindestens eine Kombinationsgruppe umfasst, die zwei spezifische Objekte umfasst.

5. System nach Anspruch 4, wobei, wenn die Messaufgabe gemäß den Objekten in den Objektsätzen erstellt wird, das Aufgabenerstellungsmodul konfiguriert ist, um eine Messaufgabe zum Messen jeder Eigenschaft gemäß messbaren Eigenschaften der Objektsätze zu erstellen.

6. System nach einem der Ansprüche 4 bis 5, weiter umfassend eine statistische Datenbank, die zum Speichern der statistischen Leistungsdaten von dem Netzwerkverwalter konfiguriert ist.

## Revendications

1. Procédé de collecte de données statistiques de performance de réseau, **caractérisée en ce qu'**elle comprend les étapes suivantes :
A, configurer un objet de base par un gestionnaire de réseau conformément à une exigence (S101), dans lequel l'objet de base comprend une direction de bureau, un opérateur et/ou une adresse IP ;
B, définir, par le gestionnaire de réseau, des ensembles d'objets en fonction de l'objet de base et définir des objets spécifiques dans chaque ensemble d'objets (S102), et synchroniser les ensembles d'objets et les objets spécifiques dans ceux-ci sur un premier plan (S103), dans lequel
l'objet spécifique est la forme spécifique de l'objet de base ; le premier plan est une carte unique où un service se produit du côté de l'élément de réseau d'un élément de réseau central ;
C, créer, par le gestionnaire de réseau, une tâche de mesure selon les ensembles d'objets (S104) et synchroniser la tâche de mesure sur le premier plan (S105) ; et
D, compter, par le gestionnaire de réseau, des données statistiques de performance de réseau reçues conformément à une exigence (S107) ;
dans lequel entre les étapes C et D, le procédé comprend en outre :
le filtrage, par le premier plan, des données statistiques de performance de réseau respectant la tâche de mesure et correspondant aux objets spécifiques dans les ensembles d'objets à partir de données de service reçues, et la transmission des données statistiques de performance de réseau au gestionnaire de réseau (S106) ;
dans lequel l'ensemble d'objets comprend un groupe et une relation de combinaison, dans lequel chaque groupe comprend au moins un objet spécifique, et chaque relation de combinaison comprend au moins un groupe de combinaison comprenant deux objets spécifiques.

2. Procédé selon la revendication 1, dans laquelle à l'étape C, le procédé pour créer la tâche de mesure selon les objets dans les ensembles d'objets est :
créer une tâche de mesure pour mesurer chaque propriété selon les propriétés mesurables des ensembles d'objets.

3. Procédé selon l'une quelconque des revendications 1 à 2, dans lequel après l'étape D, le procédé comprend en outre : le stockage des données statistiques de performance dans une base de données statistiques par le gestionnaire de réseau.

4. Système de collecte de données statistiques de performance de réseau, **caractérisé en ce qu'**il comprend un gestionnaire de réseau et un premier plan, le gestionnaire de réseau comprenant un module de configuration d'objet de base, un module de définition d'ensemble d'objets, un module de création de tâche et un module de comptage, dans lequel
le module de configuration d'objet de base est configuré pour configurer un objet de base conformément à une exigence, dans lequel l'objet de base comprend une direction de bureau, un opérateur et/ou une adresse IP ;
le module de définition d'ensemble d'objets est configuré pour définir des ensembles d'objets selon l'objet de base et définir des objets spécifiques dans chaque ensemble d'objets, et synchroniser les ensembles d'objets et les objets spécifiques dans ceux-ci sur le premier plan, et l'objet spécifique est la forme spécifique de l'objet de base ; le premier plan étant une carte unique où un service se produit du côté de l'élément de réseau d'un élément de réseau central ;
le module de création de tâche est configuré pour créer une tâche de mesure selon les ensembles d'objets et synchroniser la tâche de mesure sur le premier plan ; et
le module de comptage est configuré pour compter des données statistiques de performance de réseau reçues conformément à une exigence ;
le premier plan comprenant un module de filtrage configuré pour filtrer les données statistiques de performance de réseau respectant la tâche de mesure et correspondant aux objets spécifiques dans les ensembles d'objets à partir de données de service reçues, et transmettre les données statistiques de performance de réseau au gestionnaire de réseau ;
dans lequel le module de définition d'ensemble d'objets comprend un sous-module de définition de groupe et un sous-module de définition de relation de combinaison, dans lequel
chaque groupe défini par le sous-module de définition de groupe comprend au moins un objet spécifique ; et
chaque relation de combinaison définie par le sous-module de définition de relation de combinaison comprend au moins un groupe de combinaison comprenant deux objets spécifiques.

5. Système selon la revendication 4, dans lequel lors de la création de la tâche de mesure selon les objets dans les ensembles d'objets, le module de création de tâche est configuré pour
créer une tâche de mesure pour mesurer chaque propriété selon des propriétés mesurables des ensembles d'objets.

6. Système selon l'une quelconque des revendications 4 à 5, comprenant en outre une base de données statistiques, qui est configurée pour stocker les données statistiques de performance en provenance du gestionnaire de réseau.
